# EUROPEAN PATENT SPECIFICATION

(11) **EP 4 048 489 B1**
(45) Date of publication and mention of the grant of the patent: **07.02.2024**
(21) Application number: 20807867.5
(22) Date of filing: 20.10.2020
(51) Int. Cl.: H02G 11/00, B25J 19/00

(54) **SYSTEM AND METHOD FOR MOVING A WIRE-CARRYING SUPPORT FOR SUPPLY LINES OF OPERATING HEADS, IN PARTICULAR FOR ROBOTIC SYSTEMS**
SYSTEM UND VERFAHREN ZUM BEWEGEN EINES DRAHTTRAGENDEN TRÄGERS FÜR VERSORGUNGSLEITUNGEN VON ARBEITSKÖPFEN, INSBESONDERE FÜR ROBOTERSYSTEME
SYSTÈME ET PROCÉDÉ POUR DÉPLACER UN SUPPORT PORTEUR DE FIL POUR DES LIGNES D'ALIMENTATION DE TÊTES D'EXPLOITATION, EN PARTICULIER POUR DES SYSTÈMES ROBOTIQUES

(30) Priority: 23.10.2019 IT 201900019676
(43) Date of publication of application: 31.08.2022
(73) Proprietor: Qred S.r.l., 35129 Padova (IT)
(72) Inventor: QUARTESAN, Diego, 35030 Selvazzano Dentro (PD) (IT)
(74) Representative: Fabris, Stefano
(86) International application number: PCT/IB2020/059840
(87) International publication number: WO 2021/079260

(56) References cited:
- EP-A1- 1 892 064
- JP-A- H02 237 793
- US-A1- 2017 259 432

## Description

### Technical field

The present invention relates to a system for moving a wire-carrying support for supply lines of operating heads, in particular for robotic systems, having the features set out in the preamble of main claim 1.

### Technological background

The invention is further directed towards a method for moving the wire-carrying supports operating with the above-mentioned system.

In a number of fields, where there is provision for using operating machines which are configured for carrying out work sequences automatically inside defined spaces, it is known to use systems for supporting in a guided manner the supply line, for example, including electrical wires and/or pneumatic or hydraulic lines, which connects a source to the operating head which moves in the work space.

Such systems generally comprise supports in the form of wire-carrying chains in the form of flexible tubular sheaths, within which the bundles of wires and/or tubes of the supply line are received.

A typical application to which the invention is particularly directed, though in a non-limiting manner, is the one involving robotic systems, which use robots which in the anthropomorphic versions are formed by a chain of elements or arms which are mutually articulated to each other and which connect a base structure to an end articulation structure which can be orientated in space (also known as the "wrist" of the robot). There is connected to this end structure the working member of the operating head which is provided to carry out a predetermined operation or operating process. Typical examples of these operating members may comprise a manipulator or a set of pincers or another tool, which are configured to carry out corresponding operations or processing steps on objects which are present in the work space of the robot. In any case, the support which receives the bundle of wires/tubes, being fixedly joined to the operating member, in order to bring the supply line thereto, necessarily has to follow this member in all the movements thereof which are imposed by the operating process. Consequently, the support is subjected to movements which are rather complex and rapid, in which it is pulled with a movement in an extending manner or it is returned into a retracted condition, on the basis of the trajectories of the movements carried out by the operating member. In some known solutions, there may further be provision for the use of a resilient return device of the support, in which a resilient urging, for example, as a result of a spring, is applied to the support in order to urge the support towards the drawn-up condition, with less extension.

During these movements, there may occur undesirable and inappropriate rolling or interlocking actions of the support which receives the bundle of wires/tubes either on the wrist of the operating head or on the robot structure. As a result, stresses are induced on the support and the bundle of wires/tubes received therein and are connected with the drawing and return of the support, capable of generating deformations which can compromise the integrity of the supply line, also with the risk of possible breakages of the support or the bundle of wires/tubes Patent documents US2017259432A1, EP1892064A1 and JPH02237793A disclose other examples of robotic devices with cable holders.

### Description of the invention

A main object of the invention is to provide a system and a method for moving a wire-carrying support for supply lines of operating heads, in particular for robotic systems, which is structurally and functionally configured to overcome the limitations set out with respect to the known solutions.

### Brief description of the drawings

This object and other objects which will be clearly set out below are achieved by the invention by means of a system and a method for moving a wire-carrying support which are constructed according to the appended claims. Additional features and advantages of the invention will be better appreciated from the following detailed description of a number of preferred embodiments thereof which are illustrated, by way of non-limiting example, with reference to the appended drawings, in which:
- Figure 1 is a schematic, perspective partial view of an example of a robotic system having a system for moving a wire-carrying support constructed according to the invention,
- Figure 2 is a side elevation, drawn to a reduced scale, of the system for moving of Figure 1,
- Figure 3 is a schematic, perspective partial view, drawn to an enlarged scale, of the system for moving the wire-carrying support of Figure 1, wherein the operating head is shown in a state equipped with a gripping member,
- Figure 4 is a schematic, perspective partial view, drawn to an enlarged scale, of a detail of the system for moving the wire-carrying support of the preceding Figures,
- Figure 5 is a plan view of the detail of Figure 4,
- Figures 6 and 7 are side and front views of the detail of Figure 5, respectively,
- Figure 8 is a view corresponding to the view of Figure 5, in which the detail depicted is shown in two different operating conditions.

### Preferred embodiments of the invention

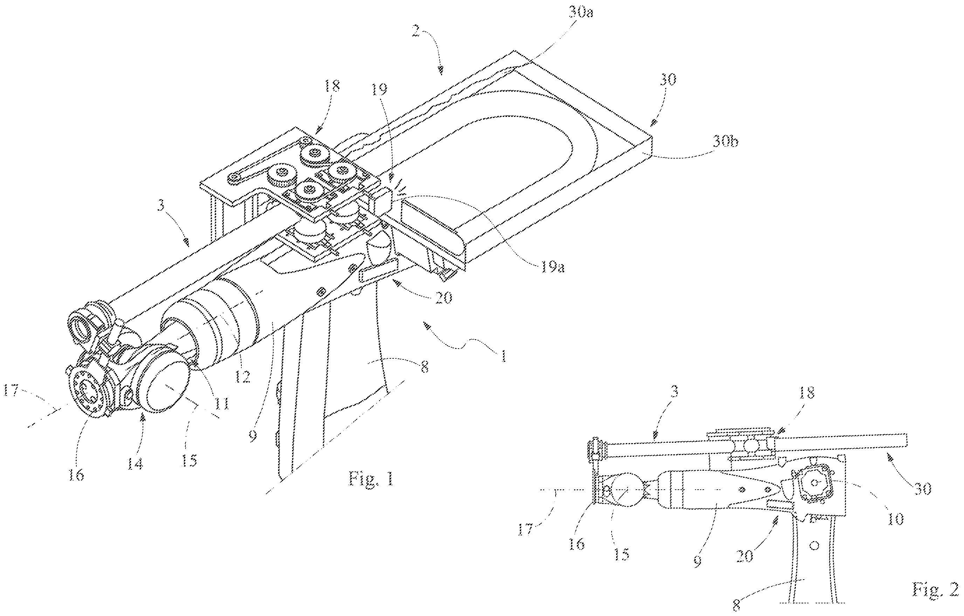

Initially with reference to Figures 1 and 2, an embodiment of a robotic system 1 which is fitted with a system 2 for moving a wire-carrying support 3 constructed according to the present invention is partially illustrated therein. In the example depicted, the robotic system relates to a robot of the anthropomorphic industrial type but it will be understood that the inventive concept of the present invention is also used in robots of other types or more generally in machines provided with an operating head 5, which therefore require the use of wire-carrying supports for carrying supply lines 6 to the head.

The term "supply line" is intended to be understood in this context to be a line formed by electrical power and/or signal wires and a line formed by pipes of a pneumatic and/or hydraulic type, and a line of wire or another support for welding or for other operations.

The support for the bundle of wires and/or tubes which constitutes the supply line extends between an end 3a in which it is fixedly joined to a structure of the robot, for connecting the wires/tubes to a source, and an opposite end 3b, in which it is fixedly joined to the operating head, the last end therefore being movable together with the head 5 during the movement of the head.

In this embodiment, the support 3 is configured in the manner of a flexible tubular sheath, inside which there is received the bundle of wires and/or tubes of the supply line 6 which is capable of supplying to the head a suitable power supply, for example, electrical and/or pneumatic, for controlling one or more operating members (not illustrated) which are mounted on the head. It will be understood that the support can be constructed in other forms, for example, in the form of a wire-carrying chain or other similar structure which is capable of receiving and optionally retaining a plurality of wires/tubes of a bundle which constitutes the supply line.

In the structure of the robot, which is conventional per se, there is provision for a vertical upright 8 to be rotatably supported on a base structure, which is not illustrated, and for an arm 9 to be rotatably supported on the upright about a horizontal rotation axis 10, the terms "horizontal" and "vertical" being intended to be understood with reference to a conventional ground support plane for the robot.

There is designated 11 a forearm which is mounted so as to be rotatable on the arm 9 about an axis 12. A wrist device 14 of the robot is supported in an articulated manner on a portion of the forearm 11. The wrist is mounted to be rotatable on the portion of the forearm about an axis 15 which is directed perpendicularly to the axis 12. At the free end of the wrist 14, there is provided a flange 16 which is rotatably supported on the wrist about an axis 17.

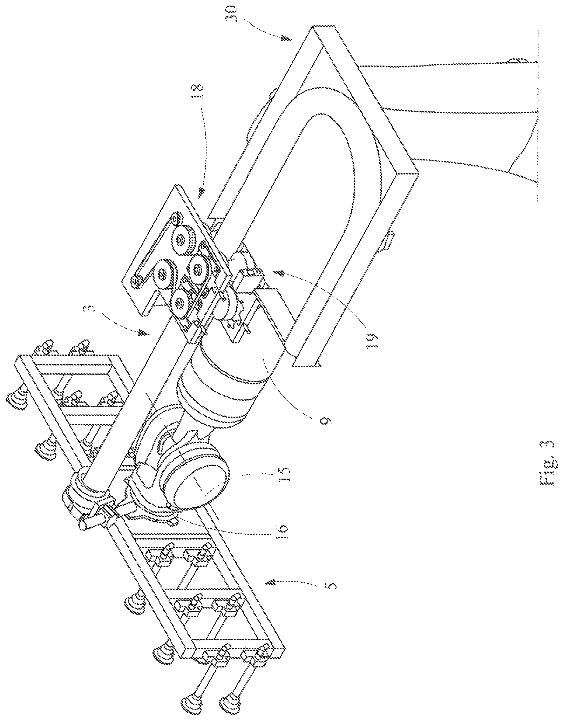

The flange 16 is configured for connection to the terminal operating head 5, which may refer, in a more general meaning, to a tool which is configured to carry out a specific operating process. It may therefore be of a different type, for example, it may be a tool suitable for carrying out a specific processing operation on an object, or it may be a manipulator or set of pincers suitable for carrying out processes for gripping or manipulating objects. Figure 3 shows an example of an operating head 5 which carries a manipulator member which is provided with a plurality of sucker gripping elements.

The operating head 5, as a result of the articulated mounting of the wrist about the above-mentioned axes, is controlled in terms of movement with three degrees of freedom of rotation, which together with the three degrees of freedom of translational movement obtained by the articulated mounting of the arms of the robot, allow control of the movement of the operating head in order to reach any point of the work space with a preselected spatial orientation.

The system 2 for moving the support 3 comprises an actuator device which is generally designated 18 and which is operatively associated with the support 3 in order to move the support itself, as will be clearly appreciated from the remainder of the description.

There is designated 19 a sensor device which is configured to detect the position of the support in relation to a reference system and there is designated 20 a control unit, which is only illustrated schematically and which is intended to control the operating instruction of the actuator device 18. According to a main feature of the moving system of the invention, the control unit of the actuator device is provided with a storage area, in which there is stored beforehand a table or a correlation function between the positions taken up by the operating head 5 and the corresponding positions of the wire-carrying support 3 which are requested following the movement of the head in order to ensure appropriate displacement of the supply line 6 and the control unit 20 is further configured to control the actuator device 19 during the movement of the operating head 5 as long as the position of the wire-carrying support 3 which is detected by the sensor device 19 does not correspond to the position of the support 3 which can be derived from the table or the correlation function on the basis of the position of the operating head 5 so that the wire-carrying support 3 can correspondingly follow the movement of the operating head.

In the embodiment described, the actuator device 18 is configured to transmit to the tubular sheath which constitutes the support 3 a movement which is advantageously generated by friction forces. Alternatively, it is possible to bring about a transmission of movement to the sheath by means of a pulling force.

Advantageously, the actuator device comprises two pairs of opposing rollers 21 which are rotatably supported on a frame 22 about respective rotation axes 21a which are all parallel with each other. There are designated 23 and 24 respective plates of the frame 22, between which the rollers 21 are supported rotatably. There is provision, between each pair of rollers 21, for the sheath of the support 3 to be interposed with relative surface contact, and wherein the rotation axes 21a of the rollers are perpendicular to the direction of movement of the support, in the region of the frame 22.

Preferably, the outer covering of each roller 21 has a concave curvature profile which corresponds to that of the cross-section of the support so as to maximize the contact surface between each roller and the tubular sheath. Each roller 21 is further coaxially fixed in terms of rotation to a respective pulley 25 which is capable of engaging with a transmission belt 26, the movement of which is generated by a driving pulley 27 which is driven by a motor 28. The configuration of the transmission belt 26 is configured to engage with each of the pulleys 25, ensuring for each pair of rollers 21 such directions of rotation as to move the sheath of the support 3 by means of friction in one direction or in the opposite direction in accordance with the direction of rotation of the motor. To this end, there is further provided a pulley 27a for returning the movement transmitted by the belt 26.

In a configuration both with one pair and with two pairs of rollers, there may advantageously be provided an autonomous thrust bearing system which is suitable for always ensuring the contact between each pair of rollers and the support interposed therebetween.

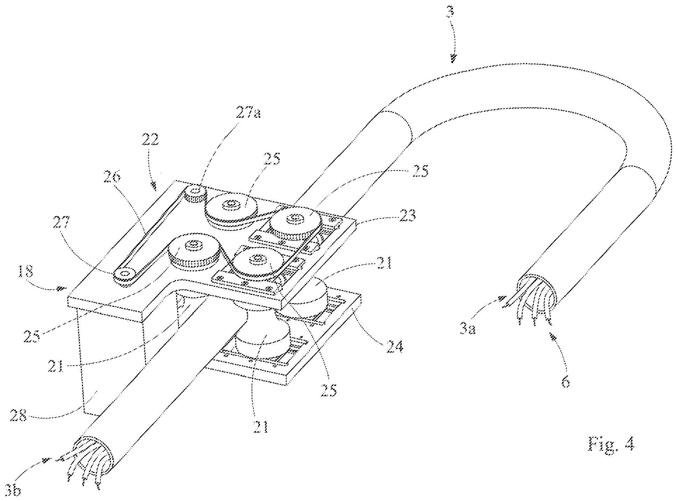

Figure 4 clearly shows the configuration of the transmission belt 26 which is engaged with each of the pulleys 25. As a result of this configuration, therefore, each of the rollers 21 is a driven roller which acts on the support 3 for transmitting movement to the support itself by friction.

In another embodiment, the actuator device 18 may comprise a belt which is pulled by a motor means and which is maintained with the portion thereof in surface contact with a corresponding portion of the outer covering of the tubular sheath of the support so as to generate a transmission of movement by friction on the support. The actuator device may take up other different embodiments, all being such that a movement of the support is induced in any case.

The sensor device 19 is configured to detect the position of the support with respect to a relative or absolute reference system.

In one embodiment, the sensor device 19 comprises a member for measuring distance with a laser pointer, which is schematically illustrated in the Figures and which is designated 19a. The pointer is provided to measure the position, in the reference system used, for example, of the apex of a curved portion of the sheath. The sheath is received in a box-shaped casing 30, which is only partially depicted in Figure 1 and which has opposing lateral walls 30a, 30b, between which two respective opposing rectilinear portions of the support which are connected to each other by a curved portion thereof are guided. As a result of the effect of the movement of the support, on the basis of the request which results from the position of the head, the curved portion of the support takes up different positions while maintaining the formation thereof. The travel in terms of extension or contraction of the support is correlated in a unique manner with the position of the curved portion of the support contained in the casing 30 and therefore the detection of the position of this curved portion, by means of the laser pointer measuring member 19a, allows the support position to be defined in a unique manner.

Alternatively, other configurations of the sensor device 19 which are similarly applicable are possible in order to establish the position of the support in the corresponding reference system. For example, there can be used a sensor which is configured to detect reference marks which are provided on the support in order to establish the position thereof.

In another alternative, the sensor device 19 may comprise an optical row transducer which cooperates operatively with the support or which may comprise an encoder transducer which is operatively associated with at least one of the motorized rollers 21. It may be observed that, in these last embodiments, the formation which the support takes up in the portion thereof received inside the box-shaped casing is not relevant, the position detected by the sensor being independent of this configuration of the support taken up during the movement thereof in terms of extension or contraction.

The position detected by the sensor device 19 is transmitted to the control unit 20 and is used by the control logic unit in order to carry out the operating control method of the system for moving the support 3, as explained in greater detail below.

It may be observed that the control unit may be arranged on board the robot (as schematically illustrated in Figure 1) or it may be arranged externally with respect to the robot in accordance with the processing capacity required, which is correlated with the spatial requirement of the components which constitute the control unit. In the first case, the unit 20 may be a unit which is connected to the robot controller system or it may be carried out in the same robot controller system.

The operating control method provides for, before the operating working use of the head 5, a so-called correlation mapping step to be carried out, wherein there is provision for making the head 5 take up a plurality of positions, and for each of the positions, which is defined by a group of coordinates in a predetermined reference system, there is provision for displacing the support 3 into the appropriate position requested by the head and for detecting by means of the sensor device 19 the position coordinates of the support.

For each of the positions taken up, there is provision for storing the correlation coordinates between the position of the head 5 and the position of the support 3 in a correlation table.

This correlation table is subsequently used by the control logic unit to decide, during the working movement of the head, by detecting the position of the support by means of the sensor device, the extent to which to control the actuator device in order to move the wire-carrying support until the support reaches the position which can be derived from the table (and correlated uniquely with the position of the operating head).

In the control unit 20, in addition to the correlation table, there may be provision for calculating, on the basis of the coordinates stored in the table and in relation to the position of the head and the corresponding and correlated position of the support, an interpolation function, for example, by applying regression analysis techniques. By means of the interpolation function, there is then calculated the objective position which the support must be made to take up, by actuating the actuator of the movement system, on the basis of the known position of the operating head taken up during the working movement thereof.

In exemplary terms, each orientated position of the head (stored in the correlation table) is defined by one or more coordinates with reference to a system of reference axes (for example, it can be defined with three angular coordinates with reference to three corresponding rotation axes of the reference system used) and there is uniquely associated with this position the position of the support (by the measurements carried out by the sensor in the corresponding reference system).

Advantageously, the step of detecting the position of the support, during the operating working movement of the head, is carried out at a preselected reading frequency by the sensor, and this frequency has to be greater than or equal to the maximum speed at which the operating head moves (for example, the angular speed at which it moves with respect to each controlled axis) in such a manner that the reading carried out by the sensor is suitable for the purpose of reaching the desired positioning of the support, during the comparison between the objective position of the support (derived from the table/correlation function) and the actual position detected by the sensor. In this regard, the logic unit of the control unit is configured to compare the position measured with the position stored in the correlation mapping, in order to control, on the basis of the result of this comparison, the actuator device in order to generate the movement of the support until reaching the objective position for the support.

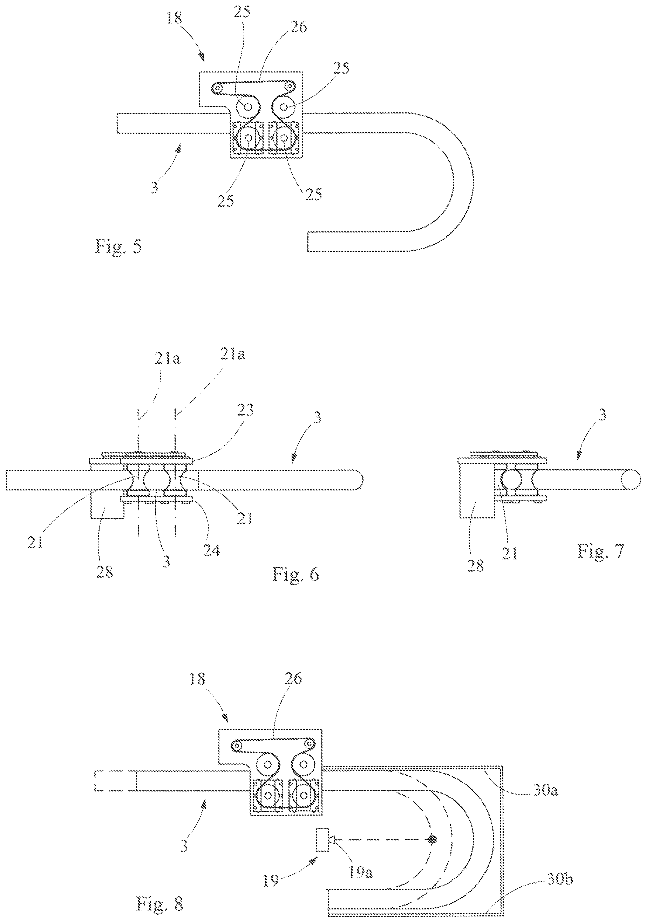

By way of example, Figure 8 shows, with broken lines, a position taken up by the support by means of an extension thereof on the basis of the drawn-up configuration inside the box-shaped casing. This position is correlated uniquely with the distance value measured by the sensor device. By assuming that this position is the objective position to be reached (which corresponds to the one required by an orientation of the head) on the basis of the position previously taken up (shown with solid lines), on the basis of the distance value measured by the sensor, the control logic unit provides for controlling the actuator device in order to cause the support to reach the objective position, in which position the support has the appropriate displacement required by the movement of the operating head. As a result, during the working movement of the operating head, the support and the bundle of wires/tubes received therein follow the movement of the head both in terms of extension and in terms of contraction of the travel on the basis of the position to be reached, this moment, which is brought about by the actuator, preventing the occurrence of stresses and therefore deformations on the support and on the wires/tubes, particularly caused by entanglements/rolling during the displacement of the bundle of wires/tubes.

In this manner, the bundle of wires/tubes and the support are not subjected to stresses (for example, pulling or pushing stresses) which are generated by the head, with the advantage of safeguarding the integrity of these structures, by removing one of the causes of frequent wear or breakage of these components, and in any case substantially limiting the frequency of the maintenance operations directed towards repair or replacement, as a result of possible breakages, both of the support and of the wires/tubes carried by the support itself.

The invention thereby achieves the objects set out with the advantages set out with respect to the known solutions.

A main advantage of the system according to the invention involves the fact that the support which receives the bundle of wires/tubes of the supply line is therefore subjected to a dynamic, active positional control which allows the integrity both of the support and of the bundle of wires/tubes to be safeguarded by preventing both from being subjected to the pulling or pushing stresses brought about by the movement of the operating head, both by direct action of the operating head and by the action of any return mechanisms which act on the support, preventing undesirable and/or inappropriate rolling actions or interlocking actions of the support and the bundle of wires/tubes on the wrist of the operating head or on the structure of the robotic system.

## Claims

1. A system for moving a wire-carrying support (3) for supply lines of operating heads (5), in particular for robotic systems, in which the support (3) is configured to receive bundles of wires and/or tubes of the supply line and extends between an end (3a) at which it is connected to a source and an opposite end (3b) at which it is connected to the head (5) and is movable in conjunction therewith, comprising:
an actuator device (18) which is operatively associated with the support (3) in order to guide the support during movement,
a sensor device (19) for detecting the position of the support (3) relative to a reference system,
a control unit (20) of the actuator device (18), in which there is stored a table or correlation function between positions which are taken up by the operating head (5) and corresponding positions of the wire-carrying support (3) which are requested following the movement of the head (5) for the suitable displacement of the supply line,
the control unit (20) being configured to control the actuator device (18) during the movement of the operating head as long as the position of the wire-carrying support (3) which is detected by the sensor device (19) does not correspond to the position of the support (3) which can be derived from the table or correlation function on the basis of the position of the operating head (5) so that the wire-carrying support (3) can correspondingly follow the movement of the operating head.

2. A system according to claim 1, wherein the support (3) is configured in the manner of a wire-carrying sheath or chain which is capable of receiving one or more wires or tubes of the supply line.

3. A system according to claim 1 or claim 2, wherein the actuator device (18) is configured to transmit to the support (3) a movement which is generated by friction or pulling forces.

4. A system according to any one of the preceding claims, wherein the actuator device (18) comprises at least one roller (21) which is rotated by a motor (28), and the rolling surface of which is kept in surface contact with the support (3) for transmitting movement to the support itself by friction.

5. A system according to claim 4, wherein the actuator device (18) comprises a pair of opposing rollers (21), between which the support (3) is interposed with mutual surface contact.

6. A system according to claim 4, wherein the actuator device (18) comprises two pairs of opposing rollers (21), each roller being motorized.

7. A system according to claim 6, wherein each roller (21) is coaxially fixed in terms of rotation to a respective pulley (25) and there is provided a belt transmission (26) which is driven by the motor, the belt engaging with each of the pulleys (25) in terms of pulling.

8. A system according to any one of claims 1 to 3, wherein the actuator device (18) comprises a belt which is pulled by a motor means and which is kept in surface contact with the support (3) for transmitting movement to the support by friction.

9. A system according to claim 2, wherein the sensor device (19) comprises a member for measuring distance with a laser pointer which is configured to detect the position of the support (3) with respect to a relative or absolute reference system.

10. A system according to claim 2, wherein the sensor device (19) is configured to detect reference marks which are provided on the support (3) in order to establish the position thereof.

11. A system according to claim 2, wherein the sensor device (19) comprises an optical row transducer which cooperates operatively with the support (3).

12. A system according to claim 4, wherein the sensor device (19) comprises an encoder transducer which is operatively associated with the at least one motorized roller.

13. A method for operatively controlling a system for moving a wire-carrying support (3) for supply lines of operating heads (5), in particular for robotic systems, according to one or more of the preceding claims, the method comprising the step of:
- producing a correlation mapping, by making the head (5) take up a plurality of positions, and for each of the positions, defined by a group of coordinates in a predetermined reference system, displacing the support (3) into the position requested by the head (5) and detecting by means of the sensor device (19) the position coordinates of the support (3),
- for each of the positions taken up, storing the correlation coordinates between the position of the head (5) and the position of the support (3) in a correlation table,
- during the working movement of the head (5), detecting the position of the support (3) by means of the sensor device (19) and controlling the actuator device (18) in order to move the support (3) until the wire-carrying support (3) reaches the position which can be derived from the table or correlation function which is correlated with the position of the operating head (5).

14. A method according to claim 13, wherein the step of detecting the position of the support (3) during the working movement of the head (5) is carried out at a preselected frequency, the value of which is selected to be greater than or equal to the maximum frequency at which the operating head (5) is rotated about the respective axes.

15. A method according to claim 13 or claim 14, wherein there is provided the step of calculating, on the basis of the coordinates stored in the correlation table relative to the position of the head (5) and the support (3), an interpolation function by means of applying regression analysis techniques.

16. A method according to claim 15, wherein there is provided the step of calculating, by means of the table or the interpolation function, an objective position to make the support (3) take up on the basis of the known position of the operating head (5) during the working movement thereof.

## Patentansprüche

1. System zum Bewegen eines drahtführenden Trägers (3) für Versorgungsleitungen von Bedienungsköpfen (5), insbesondere für Robotersysteme, bei dem der Träger (3) zur Aufnahme von Draht- und/oder Schlauchbündeln der Versorgungsleitung eingerichtet ist und sich zwischen einem Ende (3a), an dem er mit einer Quelle verbunden ist, und einem gegenüberliegenden Ende (3b) erstreckt, an dem er mit dem Kopf (5) verbunden ist und in Verbindung mit diesem beweglich ist, umfassend:
- eine Betätigungsvorrichtung (18), die mit dem Träger (3) in Wirkverbindung steht, um den Träger während einer Bewegung zu führen,
- eine Sensorvorrichtung (19) zur Erfassung der Position des Trägers (3) relativ zu einem Referenzsystem,
- eine Steuereinheit (20) der Betätigungsvorrichtung (18), in der eine Tabelle oder Korrelationsfunktion zwischen Positionen, die vom Bedienungskopf (5) eingenommen werden, und entsprechenden Positionen des drahtführenden Trägers (3) gespeichert ist, die nach der Bewegung des Kopfes (5) für die geeignete Verschiebung der Versorgungsleitung angefordert werden,
- wobei die Steuereinheit (20) eingerichtet ist, um die Betätigungsvorrichtung (18) während der Bewegung des Bedienungskopfes zu steuern, so lange die von der Sensorvorrichtung (19) erfasste Position des drahtführenden Trägers (3) nicht der Position des Trägers (3) entspricht, die aus der Tabelle oder Korrelationsfunktion auf der Basis der Position des Bedienungskopfes (5) abgeleitet werden kann, so dass der drahtführende Träger (3) der Bewegung des Bedienungskopfes entsprechend folgen kann.

2. System nach Anspruch 1, wobei der Träger (3) in der Art einer drahtführenden Hülle oder Kette eingerichtet ist, die einen oder mehrere Drähte oder Schläuche der Versorgungsleitung aufnehmen kann.

3. System nach Anspruch 1 oder 2, wobei die Betätigungsvorrichtung (18) eingerichtet ist, um eine durch Reibungs- oder Zugkräfte erzeugte Bewegung auf den Träger (3) zu übertragen.

4. System nach einem der vorhergehenden Ansprüche, wobei die Betätigungsvorrichtung (18) zumindest eine durch einen Motor (28) gedrehte Rolle (21) aufweist, deren Rollfläche in Flächenkontakt mit dem Träger (3) gehalten wird, um eine Bewegung durch Reibung auf den Träger selbst zu übertragen.

5. System nach Anspruch 4, wobei die Betätigungsvorrichtung (18) ein Paar gegenüberliegender Rollen (21) aufweist, zwischen denen der Träger (3) mit gegenseitigem Oberflächenkontakt angeordnet ist.

6. System nach Anspruch 4, wobei die Betätigungsvorrichtung (18) zwei Paare gegenüberliegender Rollen (21) aufweist, wobei jede Rolle motorisiert ist.

7. System nach Anspruch 6, wobei jede Rolle (21) in Bezug auf die Drehung koaxial an einer jeweiligen Riemenscheibe (25) befestigt ist und ein vom Motor angetriebener Riemenantrieb (26) vorgesehen ist, wobei der Riemen in Bezug auf Zug mit jeder der Riemenscheiben (25) in Eingriff steht.

8. System nach einem der Ansprüche 1 bis 3, wobei die Betätigungsvorrichtung (18) einen Riemen aufweist, der von einer Motoreinrichtung gezogen wird und der in Oberflächenkontakt mit dem Träger (3) gehalten wird, um eine Bewegung durch Reibung auf den Träger zu übertragen.

9. System nach Anspruch 2, wobei die Sensorvorrichtung (19) ein Element zur Abstandsmessung mit einem Laserpointer aufweist, der eingerichtet ist, um die Position des Trägers (3) in Bezug auf ein relatives oder absolutes Referenzsystem zu erfassen.

10. System nach Anspruch 2, wobei die Sensorvorrichtung (19) eingerichtet ist, um Referenzmarken zu erfassen, die auf dem Träger (3) vorgesehen sind, um dessen Position festzulegen.

11. System nach Anspruch 2, wobei die Sensorvorrichtung (19) einen optischen Zeilenwandler aufweist, der mit dem Träger (3) zusammenwirkt.

12. System nach Anspruch 4, wobei die Sensorvorrichtung (19) einen Encoder-Wandler aufweist, der mit zumindest einer motorisierten Rolle in Wirkverbindung steht.

13. Verfahren zur operativen Steuerung eines Systems zum Bewegen eines drahtführenden Trägers (3) für Versorgungsleitungen von Bedienungsköpfen (5), insbesondere für Robotersysteme, nach einem oder mehreren der vorhergehenden Ansprüche, wobei das Verfahren den Schritt aufweist:
- Erzeugen einer Korrelationsabbildung, indem der Kopf (5) eine Mehrzahl von Positionen einnimmt, und für jede der Positionen, die durch eine Gruppe von Koordinaten in einem vorbestimmten Referenzsystem definiert sind, Verschieben des Trägers (3) in die vom Kopf (5) angeforderte Position und Erfassen der Positionskoordinaten des Trägers (3) mit Hilfe der Sensorvorrichtung (19),
- Speichern der Korrelationskoordinaten zwischen der Position des Kopfes (5) und der Position des Trägers (3) in einer Korrelationstabelle für jede der eingenommenen Positionen,
- Erfassen der Position des Trägers (3) mittels der Sensorvorrichtung (19) und Steuern der Aktuatorvorrichtung (18) während der Arbeitsbewegung des Kopfes (5), um den Träger (3) zu bewegen, bis der drahtführende Träger (3) die Position erreicht, die aus der Tabelle oder Korrelationsfunktion abgeleitet werden kann, die mit der Position des Bedienungskopfes (5) korreliert ist.

14. Verfahren nach Anspruch 13, wobei der Schritt des Erfassens der Position des Trägers (3) während der Arbeitsbewegung des Kopfes (5) bei einer vorgewählten Frequenz durchgeführt wird, deren Wert gewählt wird, um größer als oder gleich der maximalen Frequenz zu sein, bei der der Bedienungskopf (5) um die jeweiligen Achsen gedreht wird.

15. Verfahren nach Anspruch 13 oder Anspruch 14, wobei der Schritt des Berechnens einer Interpolationsfunktion auf der Grundlage der in der Korrelationstabelle gespeicherten Koordinaten in Bezug auf die Position des Kopfes (5) und des Trägers (3) mittels Anwendung von Regressionsanalysetechniken vorgesehen ist.

16. Verfahren nach Anspruch 15, wobei der Schritt des Berechnens einer Zielposition mittels der Tabelle oder der Interpolationsfunktion vorgesehen ist, um den Träger (3) auf der Grundlage der bekannten Position des Bedienungskopfes (5) während seiner Arbeitsbewegung aufzunehmen.

## Revendications

1. Système de mise en mouvement d'un support porteur de fils (3) pour des conduites d'alimentation de têtes d'exploitation (5), en particulier pour des systèmes robotiques, dans lequel le support (3) est configuré pour recevoir des faisceaux de fil et/ou de tubes de la conduite d'alimentation et s'étend entre une extrémité (3a) à laquelle il est relié à une source et une extrémité opposée (3b) à laquelle il est relié à la tête (5) et est mobile en relation avec celle-ci, comprenant :
un dispositif actionneur (18) qui est associé fonctionnellement au support (3) afin de guider le support au cours d'un mouvement,
un dispositif capteur (19) pour détecter la position du support (3) par rapport à un système de référence,
une unité de commande (20) du dispositif actionneur (18), dans laquelle il est stocké une fonction de table ou de corrélation entre des positions qui sont prises par la tête d'exploitation (5) et des positions correspondantes du support porteur de fils (3) qui sont demandés à la suite du mouvement de la tête (5) pour le déplacement approprié de la conduite d'alimentation,
l'unité de commande (20) étant configurée pour commander le dispositif actionneur (18) au cours du mouvement de la tête d'exploitation tant que la position du support porteur de fils (3) qui est détectée par le dispositif capteur (19) ne correspond pas à la position du support (3) qui peut être déduite de la fonction de table de corrélation sur la base de la position de la tête d'exploitation (5) de sorte que le support porteur de fils (3) puisse suivre de manière correspondante le mouvement de la tête d'exploitation.

2. Système selon la revendication 1, dans lequel le support (3) est configuré à la manière d'une gaine ou d'une chaîne porteuse de fils qui est capable de recevoir un ou plusieurs fils ou tubes de la conduite d'alimentation.

3. Système selon la revendication 1 ou 2, dans lequel le dispositif actionneur (18) est configuré pour transmettre au support (3) un mouvement qui est généré par des forces de friction ou de traction.

4. Système selon l'une quelconque des revendications précédentes, dans lequel le dispositif actionneur (18) comprend au moins un rouleau (21) qui est tourné par un moteur (28), et la surface de roulement de celui-ci est maintenue en contact de surface avec le support (3) pour transmettre un mouvement au support proprement dit par friction.

5. Système selon la revendication 4, dans lequel le dispositif actionneur (18) comprend une paire de rouleaux (21) opposés entre lesquels le support (3) est interposé avec un contact de surface réciproque.

6. Système selon la revendication 4, dans lequel le dispositif actionneur (18) comprend deux paires de rouleaux (21) opposés, chaque rouleau étant motorisé.

7. Système selon la revendication 6, dans lequel chaque rouleau (21) est fixe coaxialement en termes de rotation par rapport à une poulie (25) respective et il est prévu une transmission de courroie (26) qui est entraînée par le moteur, la courroie se mettant en prise avec chacune des poulies (25) en termes de traction.

8. Système selon l'une quelconque des revendications 1 à 3, dans lequel le dispositif actionneur (18) comprend une courroie qui est tractée par un moyen moteur et qui est maintenue en contact de surface avec le support (3) pour transmettre un mouvement au support par friction.

9. Système selon la revendication 2, dans lequel le dispositif capteur (19) comprend un élément de mesure de distance avec un pointeur laser qui est configuré pour détecter la position du support (3) par rapport à un système de référence relative ou absolue.

10. Système selon la revendication 2, dans lequel le dispositif capteur (19) est configuré pour détecter des marques de référence qui sont prévues sur le support (3) afin d'établir la position de celui-ci.

11. Système selon la revendication 2, dans lequel le dispositif capteur (19) comprend un transducteur de rangée optique qui coopère fonctionnellement avec le support (3).

12. Système selon la revendication 4, dans lequel le dispositif capteur (19) comprend un transducteur encodeur qui est associé fonctionnellement à l'au moins un rouleau motorisé.

13. Procédé pour commander fonctionnellement un système de mise en mouvement d'un support porteur de fils (3) pour des conduites d'alimentation de têtes d'exploitation (5), en particulier pour des systèmes robotiques, selon une ou plusieurs des revendications précédentes, le procédé comprenant les étapes suivantes :
- la production d'un mappage de corrélation en amenant la tête (5) à prendre une pluralité de positions et, pour chacune des positions, définies par un groupe de coordonnées dans un système de référence prédéterminé, en déplaçant le support (3) à la position demandée par la tête (5) et en détectant, à l'aide du dispositif capteur (19), les coordonnées de position du support (3),
- pour chacune des positions prises, le stockage des coordonnées de corrélation entre la position de la tête (5) et la position du support (3) dans une table de corrélation,
- pendant le mouvement de fonctionnement de la tête (5), la détection de la position du support (3) à l'aide du dispositif capteur (19) et la commande du dispositif actionneur (18) afin de mettre le support (3) en mouvement jusqu'à ce que le support porteur de fils (3) atteigne la position qui peut être déduite de la fonction de table ou de corrélation qui est corrélée avec la position de la tête d'exploitation (5).

14. Procédé selon la revendication 13, dans lequel l'étape de la détection de la position du support (3) au cours du mouvement de fonctionnement de la tête (5) est effectuée à une fréquence présélectionnée dont la valeur est sélectionnée pour être supérieure ou égale à la fréquence maximale à laquelle la tête d'exploitation (5) est tournée autour des axes respectifs.

15. Procédé selon la revendication 13 ou 14, dans lequel il est prévu l'étape du calcul, sur la base des coordonnées stockées dans la table de corrélation par rapport à la position de la tête (5) et du support (3), d'une fonction d'interpolation à l'aide de l'application de techniques d'analyse par régression.

16. Procédé selon la revendication 15, dans lequel il est prévu l'étape du calcul, à l'aide de la fonction de table ou d'interpolation, d'une position objective que le support (3) est amené à prendre sur la base de la position connue de la tête d'exploitation (5) au cours du mouvement de fonctionnement de celle-ci.
